# EUROPÄISCHE PATENTSCHRIFT

(11) **EP 3 681 780 B1**
(45) Veröffentlichungstag und Bekanntmachung des Hinweises auf die Patenterteilung: **22.07.2026**
(21) Anmeldenummer: 18768862.7
(22) Anmeldetag: 10.09.2018
(51) Int. Cl.: B61L 23/04, B60Q 1/52, G08G 1/16

(54) **VERFAHREN UND EINRICHTUNG ZUR AUSGABE EINES KOLLISIONSWARNSIGNALS AN DIE UMGEBUNG EINER MITTELSPURGEFÜHRTEN STRASSENBAHN**
METHOD AND DEVICE FOR OUTPUTTING A COLLISION WARNING SIGNAL TO THE SURROUNDINGS OF A CENTER-LANE GUIDED TRAM
PROCÉDÉ ET DISPOSITIF D'ÉMISSION D'UN SIGNAL D'AVERTISSEMENT DE COLLISION DANS L'ENVIRONNEMENT D'UN TRAMWAY ROULANT SUR LA VOIE CENTRALE

(30) Priorität: 11.09.2017 DE 102017120954
(43) Veröffentlichungstag der Anmeldung: 22.07.2020
(73) Patentinhaber: KNORR-BREMSE Systeme für Schienenfahrzeuge GmbH, 80809 München (DE)
(72) Erfinder: SCHMID, Martin, 80636 München (DE); KOHL, Michael, 84036 Landshut (DE)
(86) Internationale Anmeldenummer: PCT/EP2018/074322
(87) Internationale Veröffentlichungsnummer: WO 2019/048683

(56) Entgegenhaltungen:
- DE-A1- 102013 200 398
- DE-A1- 102014 208 180
- TPOST ONLINE: "Beim Linksabbiegen vom Zug gerammt", TÜÜFNER POSCHT - DIE DORFZEITUNG VON TEUFEN, 4 May 2016 (2016-05-04), Germany, XP055528789, ISBN: 978-3-7934-1428-5, Retrieved from the Internet <URL:https://www.tposcht.ch/news/beim-linksabbiegen-vom-zug-gerammt/> [retrieved on 20181130]

## Beschreibung

Die vorliegende Erfindung betrifft ein Verfahren sowie eine Einrichtung zur Ausgabe eines Kollisionswarnsignals an die Umgebung einer mittelspurgeführten Straßenbahn zur Kollisionsvermeidung hinsichtlich eines die Fahrspur der Straßenbahn wahrscheinlich kreuzenden links abbiegenden Kraftfahrzeuges. Ferner wird ein das Verfahren umsetzendes Computerprogrammprodukt angegeben.

Das Einsatzgebiet der Erfindung erstreckt sich vornehmlich auf mittelspurgeführte Bahnen, insbesondere Straßenbahnen. Bei diesen öffentlichen Verkehrsmitteln ist die Fahrstrecke per Schiene auf eine Mittelspur einer mehrspurigen Straße festgelegt, welche daneben auch von anderen Kraftfahrzeugen, insbesondere Personenkraftwagen, befahren wird. In der Regel befährt die mittelspurgeführte Straßenbahn hierbei etwa die Mitte der Fahrbahn, meist eine linke Fahrspur derselben Fahrrichtung, wobei rechts hiervon mindestens eine weitere Fahrspur vorhanden ist, welche vorzugsweise dem nicht-schienengebundenen Fahrzeugverkehr zur Verfügung steht. Bedingt durch die Fahrspurführung des Straßenverkehrs treten Situationen auf, bei welchen links abbiegende Kraftfahrzeuge die Fahrspur der Straßenbahn beim Abbiegen kreuzen würden. Dies ist gefahrlos nur dann möglich, wenn keine Kollisionsgefahr mit einer herannahenden Straßenbahn besteht. Daneben ist die erfindungsgemäße Lösung auch zur Kollisionswarnung im Zusammenhang mit Nutzfahrzeugen oder dergleichen statt mittelspurgeführten Straßenbahnen nutzbar.

Im Straßenverkehr bildet insbesondere bei mittelspurgeführten Straßenbahnen ein Zusammenprall mit links abbiegenden Verkehrsteilnehmern eine der häufigsten Unfallursachen. Denn viele Verkehrsteilnehmer sind bei entsprechenden Straßenkreuzungen oder Abbiegesituationen nicht daran gewöhnt, dass diese von links hinten, meist aus einem toten Winkel heraus, von einer Straßenbahn überholt werden können und achten deshalb beim Linksabbiegen meist nur auf entgegenkommende Verkehrsteilnehmer. Sobald der Weg nach vorn frei ist, erfolgt das Linksabbiegen und ein Zusammenprall mit einer von hinten kommenden Straßenbahn ist bei der vorstehend beschriebenen Gefahrensituation unabwendbar.

Zwar besteht gemäß des allgemein bekannten Standes der Technik seitens der Straßenbahn die Möglichkeit, über ein Signalhorn manuell ein akustisches Warnsignal abzugeben, jedoch hängt dies in erster Linie von der Aufmerksamkeit des Fahrzeugführers der Straßenbahn ab und es muss noch genügend Reaktionszeit für das Kraftfahrzeug mit Linksabbiegerabsicht verbleiben, um auf ein solches manuell ausgelöstes akustisches Warnsignal reagieren zu können.

Statistische Auswertungen haben ergeben, dass die meisten der vorstehend beschriebenen Unfallsituationen durch Aktionen seitens des schienengebundenen Fahrzeuges praktisch nicht verhindert werden können. Die Einleitung des Linksabbiegens eines Kraftfahrzeuges kann bei den hier betrachteten Situationen praktisch zu jedem Zeitpunkt mit beliebigem Abstand zum herannahenden Schienenfahrzeug erfolgen. In manchen Fällen erfolgt das Linksabbiegen erst auf derselben Höhe einer Straßenbahn, so dass dem Schienenfahrzeug praktisch kein Bremsweg mehr zur Verfügung steht.

Aus dem Stand der Technik allgemein bekannte automatische Warnsysteme konzentrieren sich auf eine Warnung des Straßenbahnfahrers bis hin zu einem automatischen Notbremsen des Schienenfahrzeuges im Falle eines blockierten Fahrwegs. Allerdings greift dieser Lösungsansatz bei der vorstehend beschriebenen Gefahrensituation eines wahrscheinlich links abbiegenden Kraftfahrzeuges zu kurz, da diese Situation sehr plötzlich und ohne ausreichenden Bremsweg einsetzen kann.

In der DE 10 2013 200 398 A1 ist ein Verfahren und eine Vorrichtung zur Warnung vor einer Kollision eines Kraftfahrzeuges offenbart. Dazu werden für den Fahrer mit seinen menschlichen Sinnen wahrnehmbare Signale ausgegeben.

Aus der DE 10 2016 010 818 A1 geht eine Einrichtung zur Ausgabe eines Kollisionswarnsignals an die Umgebung eines Fahrzeuges, das beispielsweise auch eine Straßenbahn sein kann, zwecks Kollisionsvermeidung hinsichtlich anderer Verkehrsteilnehmer hervor. Diese Warneinrichtung geht von der speziellen Situation aus, dass sich die Straßenbahn selbst im Stillstand befindet und hierdurch die Sicht von sich in der Umgebung der Straßenbahn befindlichen Fahrzeugen einschränkt. Beispielsweise ist diese Situation gegeben, wenn ein Fahrzeug ein Linksüberholmanöver bezüglich der Straßenbahn einleitet, ohne zu bemerken, dass vor der Straßenbahn ein anderes Fahrzeug deren Fahrspur überquert.

Zur Lösung dieser speziellen Problematik wird vorgeschlagen, im stillstehenden Fahrzeug eine Einheit zur Erfassung einer Anzahl von externen Informationen zur Auswertung der momentanen Verkehrssituation anzuordnen, wobei die externen Informationen zumindest eine Information über ein sich in der Umgebung des Fahrzeuges befindliches Objekt, beispielsweise ein anderes Fahrzeug, ein sich dem stillstehenden Fahrzeug näherndes und/oder überholendes Objekt, beispielweise anderes Fahrzeug, und/oder ein an einer Fahrspur des stillstehenden Fahrzeuges passierendes Objekt oder Fahrzeug, umfassen. In Abhängigkeit der Auswertung gibt eine Ausgabeeinheit des stillstehende Fahrzeug zwecks Kollisionsvermeidung an die umgebenden Fahrzeuge automatisch ein Warnsignal aus.

Demgegenüber ist es die Aufgabe der vorliegenden Erfindung, ein Verfahren sowie eine hiermit korrespondierende Einrichtung zur Ausgabe eines Kollisionswarnsignals an die Umgebung einer mittelspurgeführten Straßenbahn zu schaffen, welches/welche auf einfache Weise und zuverlässig hilft, eine Kollision zwischen einer fahrenden Straßenbahn und einem die Fahrspur der Straßenbahn wahrscheinlich kreuzenden links abbiegenden Kraftfahrzeug zu vermeiden.

Die Aufgabe wird durch die Merkmale von Anspruch 1 gelöst. Hinsichtlich einer hierzu korrespondierenden Einrichtung wird auf Anspruch 5 verwiesen. Der Anspruch 9 gibt ein diesbezügliches Computerprogrammprodukt an.

Die übrigen rückbezogenen abhängigen Ansprüche beinhalten vorteilhafte Weiterbildungen der erfindungsgemäßen Lösung.

Die Erfindung schließt die verfahrenstechnische Lehre ein, dass zur Kollisionsvermeidung zwischen Straßenbahn und Kraftfahrzeug in der besagten Linksabbiegesituation die folgenden Schritte durchgeführt werden:
- Ermittlung einer wahrscheinlichen Linksabbiegerabsicht eines der Straßenbahn auf einer rechten parallelen Fahrspur vorausfahrenden Kraftfahrzeuges durch eine das Kraftfahrzeug erfassende vorausgerichtete Sensorik der Straßenbahn. Falls eine Linksabbiegeabsicht des Kraftfahrzeuges vorliegt, erfolgt eine
- Erstellung einer Prognose über eine zukünftige Kollisionsgefahr zwischen der Straßenbahn und dem Kraftfahrzeug anhand des Fahrzeugabstandes und der Fahrgeschwindigkeiten. Falls eine solche Kollisionsgefahr als wahrscheinlich prognostiziert wird, erfolgt eine
- Ausgabe eines primär an das vorausfahrende Kraftfahrzeug gerichteten präventiven Kollisionswarnsignals durch die Straßenbahn.

Der Vorteil der erfindungsgemäßen Lösung besteht darin, dass hierdurch eine Warnung anderer Verkehrsteilnehmer mit Linksabbiegeabsicht und damit der Vermeidung einer gefährlichen Verkehrssituation noch vor deren Entstehung ermöglicht wird. Denn das Kollisionswarnsignal wird präventiv durch die Straßenbahn abgegeben, also bevor die gefährliche Verkehrssituation eingetreten ist. In dieser Phase besteht für das Kraftfahrzeug mit Linksabbiegeabsicht noch die Möglichkeit gegenzusteuern. Durch die erfindungsgemäße Lösung werden also dynamische Situationen im Straßenverkehr vorausschauend bewertet. Dies bedeutet, dass die Erstellung der Prognose über eine zukünftige Kollisionsgefahr ein Erkennen einer Verkehrssituation, welche sich zu einer Gefahr entwickeln kann, beinhaltet und ab einem festgelegten Gefahrenlevel präventiv eine Warnung ausgelöst wird. Basis hierfür ist, dass die Ermittlung einer wahrscheinlichen Linksabbiegeabsicht beinhaltet, dass abzuschätzen ist, ob ein herannahendes Kraftfahrzeug eine Linksabbiegeabsicht hat oder nicht. Dies kann beispielsweise an einem Spurwechsel des vorausfahrenden Kraftfahrzeuges auf eine Linksabbiegespur und/oder eine Aktivierung eines linken Blinkers des vorausfahrenden Kraftfahrzeuges durch eine entsprechende Sensorik der Straßenbahn überwacht werden.

Das erfindungsgegenständliche präventive Kollisionswarnsignal infolge der Prognose wird vorzugsweise ausgegeben, bevor der Abstand zwischen Straßenbahn und Kraftfahrzeug einen prognostizierten Bremsweg der Straßenbahn unterschreitet. In dieser Geschwindigkeits- und Abstandsituation kann eine wirkungsvolle Warnung des Kraftfahrzeuges mit Linksabbiegeabsicht durchgeführt werden. Denn unterschreitet der Abstand zwischen Straßenbahn und Kraftfahrzeug einen Bremsweg der Straßenbahn, welcher anhand der aktuellen Fahrgeschwindigkeit, der Fahrzeugmasse sowie der Reibparameter Rad-Schiene prognostiziert werden kann, so ist eine präventive Kollisionswarnung im Extremfall nicht mehr möglich und trotz Vollbremsung würde die Straßenbahn mit dem ihren Fahrweg kreuzenden Linksabbieger kollidieren. Da die erfindungsgegenständliche Warnung die Entstehung der Gefahrensituation verhindert, ist diese unter Umständen auch noch bei kleineren Abständen vom ausgebenden Fahrzeug zum Kraftfahrzeug wirksam.

Um stets den vorstehend beschriebenen Sicherheitsabstand einzuhalten, wird gemäß eine die Erfindung verbessernde Maßnahme empfohlen, dass in dem Fall, dass bei bestehender Kollisionsgefahr der prognostizierte Bremsweg der Straßenbahn größer als der Abstand zwischen Straßenbahn und Kraftfahrzeug ist, eine präventive Abbremsung des Schienenfahrzeuges auf eine geringere Fahrgeschwindigkeit durchgeführt wird, um den Bremsweg der Straßenbahn zu wahren.

Eine herkömmliche Straßenbahn hat bei einer Fahrgeschwindigkeit von etwa 70 km/h einen Bremsweg von etwa 70 m. Um in diesem Falle eine Kollision mit einem links abbiegenden Kraftfahrzeug zu vermeiden, müsste die Warnung schon ausgelöst werden, bevor der Abstand zwischen dem links abbiegenden Kraftfahrzeug und der Straßenbahn den Bremsweg unterschreitet. Im vorliegenden Fall kann die Kollisionswarnung also durchaus schon bei einem Abstand von ca. 100 m zwischen Straßenbahn und Kraftfahrzeug ausgegeben werden.

Die Ausgabe des präventiven Kollisionswarnsignals erfolgt vorzugsweise optisch, beispielsweise über einen Scheinwerfer, welcher auf die Seiten- oder Rückspiegel des betreffenden vorausfahrenden Kraftfahrzeuges ausgerichtet ist. Der optische Lichtstrahl kann hierdurch optisch vom Fahrer des vorausfahrenden Kraftfahrzeuges erfasst und entsprechend interpretiert werden. Daneben ist es auch denkbar, dass das optische Lichtstrahlsignal vom vorausfahrenden Kraftfahrzeug automatisch, beispielsweise über einen Totwinkel-Assistenten, erfasst und interpretiert werden kann. Der Totwinkel-Assistent verfügt gewöhnlich über eine Sensorik im Seiten- oder Rückspiegel des Kraftfahrzeuges und kann diese Zusatzfunktion also mit übernehmen. Das erfindungsgegenständliche Warnsignal kann zusätzlich oder alternativ auch akustisch ausgegeben werden, beispielsweise mittels eines Lautsprechers oder Signalhorns der Straßenbahn.

Erfindungsgemäß wird vorgeschlagen, dass das betreffende Kraftfahrzeug und auch andere Verkehrsteilnehmer das präventive Kollisionswarnsignal drahtlos erhalten; beispielsweise über ein drahtloses Informationsübertragungssystem, an dem die Verkehrsteilnehmer mit angebunden sind und welches Bestandteil eines Fahrzeug-Assistenzsystems ist.

Daneben ist es auch denkbar, dass die Auswerteeinheit der erfindungsgegenständlichen Kollisionswarneinrichtung Bestandteil der Fahrzeug-/Bremssteuerung des Schienenfahrzeuges ist. So kann die Auswerteeinheit gemäß dem erfindungsgemäßen Algorithmus beispielsweise auch die Bremssteuerung des Schienenfahrzeuges im Notfall direkt zu einer Notbremsung aktivieren, falls die vorstehend beschriebenen Kriterien einer präventiven Kollisionswarnung nicht mehr möglich sind.

Die erfindungsgemäße Lösung lässt sich in Form eines Computerprogrammprodukts mit Programmcodemitteln zur Durchführung des erfindungsgegenständlichen Verfahrens realisieren, wobei das Computerprogrammprodukt auf der vorstehend erwähnten Auswerteeinheit und der Einrichtung zur Ausgabe eines Kollisionswarnsignals abläuft. Daneben ist es auch denkbar, dieses Computerprogrammprodukt auf einem computerlesbaren Datenspeicher abzuspeichern.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Fig. 1 eine schematische Darstellung einer Verkehrssituation mit einer mittelspurgeführten Straßenbahn sowie einem die Fahrspur der Straßenbahn wahrscheinlich kreuzenden links abbiegenden Kraftfahrzeug, und
Fig. 2 einen Ablaufplan des Verfahrens zur Ausgabe eines Kollisionswarnsignals bei einer Verkehrssituation gemäß Fig. 1.

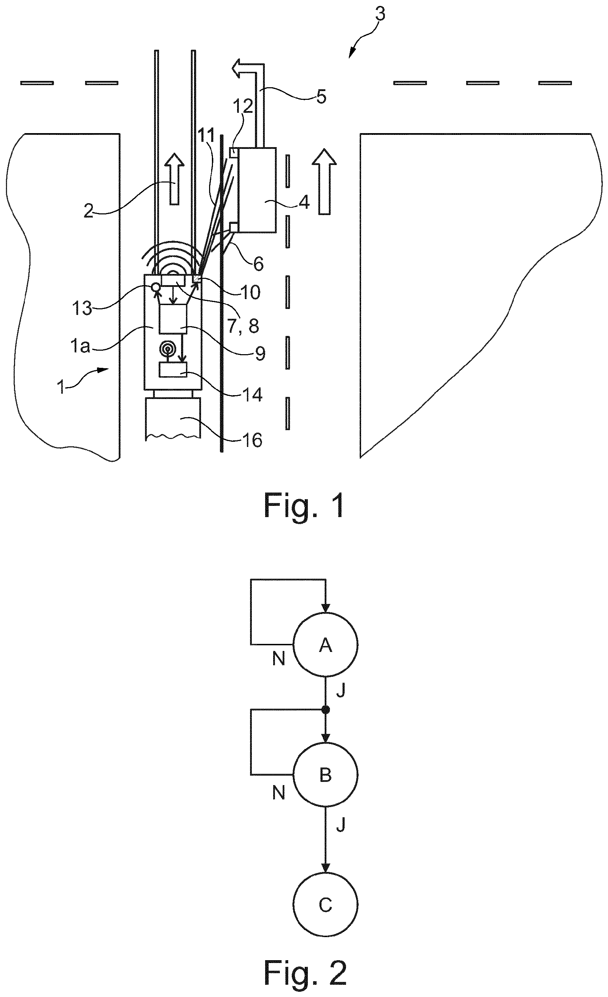

Fig. 1 zeigt eine aus mehreren Wagen 1a und 1b bestehende Straßenbahn 1, welche sich entlang einer Fahrspur 2 schienengeführt einer Kreuzung 3 nähert. Vorausfahrend nähert sich ein Kraftfahrzeug 4 - hier ein Personenkraftwagen - ebenfalls der Kreuzung 3 und befindet sich dabei auf einer Linksabbiegespur 5. Das Kraftfahrzeug 4 signalisiert eine Linksabbiegeabsicht durch Aktivierung seines linken Blinkgebers 6.

An der Frontseite des Wagens 1a der Straßenbahn 1 sind vorausgerichtete Sensormittel in Form einer Radarsensorik 7, welche mit einer optischen Bilderfassungssensorik 8 kombiniert ist, angeordnet. Diese Sensormittel erfassen und verfolgen die Bewegung von auf der rechten Seite der Straßenbahn 1 vorausfahrenden Fahrzeugen und ermitteln eine wahrscheinliche Linksabbiegeabsicht zum einen durch Detektion des aktivierten Blinkgebers 6 am Kraftfahrzeug 4 durch die optische Bilderfassungssensorik 7 und zum anderen, indem die Radarsensorik 8 die Position des Kraftfahrzeuges 4 auf der Linksabbieger-Fahrspur 5 feststellt. Diese Informationen werden durch eine nachgeschaltete Auswerteeinheit 9 dahingehend plausibilisiert, dass das vorausfahrende Kraftfahrzeug 4 die Absicht hat, nach links abzubiegen, wobei die Fahrspur 2 der Straßenbahn 1 gekreuzt werden würde.

Unter Berücksichtigung des ebenfalls über die Radarsensorik 8 ständig ermittelten Fahrzeugabstands sowie der hieraus abgeleiteten Fahrgeschwindigkeit des Kraftfahrzeuges 4 sowie der eigenen Fahrgeschwindigkeit der Straßenbahn 1 prognostiziert eine den Sensormitteln nachgeschaltete Auswerteeinheit 9 das Risiko einer zukünftigen Kollisionsgefahr, die dann eintreten würde, wenn das Kraftfahrzeug 4 im Bereich der Kreuzung 3 die Fahrspur 2 in dem Moment kreuzt, wenn auch die Straßenbahn 1 die Kreuzung 3 erreicht hat.

Liegt eine solche zukünftige Kollisionsgefahr vor, so veranlasst die Auswerteeinheit 9 der Straßenbahn 1 über Ausgabemittel in Form eines Scheinwerfers 10 ein optisches Lichtstrahlsignal 11, das von einem Rückspiegel 12 am Kraftfahrzeug 4 aus bemerkbar ist, damit der Fahrers des Kraftfahrzeuges 4 vor der anstehenden Kollisionsgefahr gewarnt wird, um das riskante Fahrmanöver zu unterlassen. Alternativ oder zusätzlich wird über einen ebenfalls an der Auswerteeinheit 9 als Ausgabemittel angeschlossenen Lautsprecher 3 ein akustisches Warnsignal ausgegeben.

Zusätzlich ist bei diesem Ausführungsbeispiel die Auswerteeinheit 9 auch an eine Übertragungseinheit 14 zur drahtlosen Übermittlung des Kollisionswarnsignals an andere Verkehrsteilnehmer angeschlossen. Ist das vorausfahrende Fahrzeug 4 mit einer kompatiblen Empfangseinrichtung zum Empfang des drahtlos übermittelten Kollisionswarnsignals - beispielsweise im Rahmen eines Fahrzeug-Assistenzsystems - ausgestattet, so kann die Kollisionswarnung auch hierüber erfolgen und dem Fahrer des Kraftfahrzeuges 4 übermittelt werden. Über die drahtlose Übertragungseinheit 14 kann das Kollisionswarnsignal zusätzlich auch an andere Verkehrsteilnehmer übertragen werden, um diese ebenfalls über das Unfallrisiko im Bereich der Kreuzung 3 zu informieren.

Gemäß Fig. 2 wird bei dem erfindungsgemäßen Verfahren zur Ausgabe eines Kollisionswarnsignals an die Umgebung einer mittelspurgeführten Straßenbahn zur Kollisionsvermeidung mit einem links abbiegenden Kraftfahrzeug in einem ersten Schritt A zunächst geprüft, ob ein rechts von der Straßenbahn vorausfahrendes Kraftfahrzeug eine wahrscheinliche Linksabbiegeabsicht besitzt. Ist dies nicht der Fall, so wird die Überprüfung des rechts vorausfahrenden Verkehrs durch die vorstehend beschriebene Sensorik der Straßenbahn fortgesetzt.

Ist dies anderenfalls der Fall, liegt also eine Linksabbiegeabsicht eines vorausfahrenden Kraftfahrzeuges vor, so wird in einem zweiten Schritt B eine Prognose hinsichtlich einer zukünftigen Kollisionsgefahr zwischen Straßenbahn und Kraftfahrzeug unter Berücksichtigung des Fahrzeugabstandes und der Fahrzeuggeschwindigkeiten der Fahrzeuge erstellt. Liegt anhand dieser Kriterien keine Kollisionsgefahr vor, so wird die Prognose solange fortgesetzt, bis das Fahrzeug mit Linksabbiegeabsicht das signalisierte Fahrmanöver gefahrenlos vollzogen oder abgebrochen hat.

Führt anderenfalls die Prognose zu dem Ergebnis, dass eine Kollisionsgefahr wahrscheinlich ist, so wird in einem Schritt C rechtzeitig ein an das vorausfahrende Kraftfahrzeug gerichtetes präventives Kollisionswarnsignal ausgegeben. Das präventive Kollisionswarnsignal wird bei diesem Ausführungsbeispiel ausgegeben, bevor der Abstand zwischen der Straßenbahn und dem Kraftfahrzeug einen prognostizierten Bremsweg der Straßenbahn unterschreitet, um die rechtzeitige Reaktion des Kraftfahrzeuges zwecks Kollisionsvermeidung zu gewährleisten.

In dem Fall, dass bei prognostizierter Kollisionsgefahr der Bremsweg der Straßenbahn größer als der Abstand zwischen dieser und dem Kraftfahrzeug ist, wird ein Abbremsen der Straßenbahn durchgeführt, um den Bremsweg der Straßenbahn zu wahren. Diese optionale Sicherheitsmaßnahme schafft einen Sicherheitsbereich vor der Straßenbahn, um die erfindungsgegenständliche Gefahrensituation zu vermeiden und kann auch manuell abgeschaltet werden, beispielsweise bei dichten Verkehrssituationen.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So kann die erfindungsgemäße Lösung der Ausgabe eines Kollisionswarnsignals an die Umgebung einer Straßenbahn oder dergleichen auch mit Fahrer-Assistenzsystemen, beispielsweise für autonomes Fahren oder dergleichen, kombiniert werden.

Außerdem ist es nicht zwingend, dass das Warnsignal unter Berücksichtigung des Bremsweges des ausgebenden Fahrzeugs gesendet wird. Auch bei kürzeren Abständen zwischen dem ausgebenden Fahrzeug und dem kollisionsgefährdeten Fahrzeug könnte noch ein Unfall verhindet werden, allerdings mit einer geringeren Wahrscheinlichkeit.

### BEZUGSZEICHENLISTE

- 1: Straßenbahn
- 2: Fahrspur
- 3: Kreuzung
- 4: Kraftfahrzeug
- 5: (Linksabbieger-)Fahrspur
- 6: Blinkgeber
- 7: Bilderfassungssensorik
- 8: Radarsensorik
- 9: Auswerteeinheit
- 10: Scheinwerfer
- 11: Lichtstrahlsignal
- 12: Rückspiegel
- 13: Lautsprecher
- 14: Übertragungseinheit

## Patentansprüche

1. Verfahren zur Ausgabe eines Kollisionswarnsignals an die Umgebung einer auf einer Mittelspur einer mehrspurigen Straße geführten Straßenbahn (1) zur Kollisionsvermeidung hinsichtlich eines wahrscheinlich linksabbiegenden, die Fahrspur (2) der Straßenbahn (1) kreuzenden Kraftfahrzeuges (4),
wobei zur Kollisionsvermeidung zwischen Straßenbahn (1) und Kraftfahrzeug (4) die folgenden Schritte durchgeführt werden:
- Ermittlung einer wahrscheinlichen Linksabbiegeabsicht (A) eines auf einer Fahrspur (5) rechts von der Fahrspur (2) der Straßenbahn (1), der Straßenbahn (1) vorausfahrenden Kraftfahrzeuges (4) durch eine das Kraftfahrzeug (4) erfassende vorausgerichtete Sensorik der Straßenbahn (1), und falls eine wahrscheinliche Linksabbiegeabsicht des Kraftfahrzeuges (4) vorliegt,
- Erstellung einer Prognose (B) über eine zukünftige Kollisionsgefahr zwischen Straßenbahn (1) und Kraftfahrzeug (4) unter Berücksichtigung des Fahrzeugabstandes und der Fahrgeschwindigkeiten, und falls eine Kollisionsgefahr wahrscheinlich ist,
- Ausgabe eines zumindest an das vorausfahrende Kraftfahrzeug (4) gerichteten präventiven Kollisionswarnsignals (C) durch die Straßenbahn (1), wobei das Kollisionswarnsignal (C) über eine drahtlose Übermittlung zumindest an den Fahrer des Kraftfahrzeuges (4) und andere Verkehrsteilnehmer übermittelt wird, deren Kraftfahrzeuge (4) mit einer kompatiblen Empfangseinrichtung zum Empfang des drahtlos übermittelten Kollisionswarnsignals ausgestattet sind.

2. Verfahren nach Anspruch 1,
**dadurch gekennzeichnet, dass**
das präventive Kollisionswarnsignal in Folge der Prognose ausgegeben wird, bevor der Abstand zwischen Straßenbahn (1) und Kraftfahrzeug (4) einen prognostizierten Bremsweg der Straßenbahn (1) unterschreitet.

3. Verfahren nach Anspruch 1 oder 2,
**dadurch gekennzeichnet, dass**
in dem Fall, dass bei bestehender Kollisionsgefahr der prognostizierte Bremsweg der Straßenbahn (1) größer als der Abstand zwischen Straßenbahn (1) und Kraftfahrzeug (4) ist, eine Abbremsung der Straßenbahn (1) durchgeführt wird, um den Bremsweg der Straßenbahn (1) zu wahren.

4. Verfahren nach Anspruch 1,
**dadurch gekennzeichnet, dass**
zur Ermittlung einer wahrscheinlichen Linksabbiegeabsicht ein Spurwechsel des vorausfahrenden Kraftfahrzeuges (4) auf eine Linksabbieger-Fahrspur (5) und/oder eine Aktivierung eines linken Blinkgebers (6) am Kraftfahrzeug (4) durch die Sensorik der Straßenbahn (1) überwacht wird.

5. Einrichtung zur Ausgabe eines Kollisionswarnsignals an die Umgebung einer auf einer Mittelspur einer mehrspurigen Straße geführten Straßenbahn (1) zur Kollisionsvermeidung hinsichtlich eines wahrscheinlich linksabbiegenden, die Fahrspur (2) der Straßenbahn (1) kreuzenden Kraftfahrzeuges (4),
wobei zur Kollisionsvermeidung zwischen Kraftfahrzeug (4) und Straßenbahn (1), letztere mit vorausgerichteten Sensormitteln ausgestattet ist, zur Ermittlung einer wahrscheinlichen Linksabbiegeabsicht eines auf einer Fahrspur (5) rechts von der Fahrspur (2) der Straßenbahn (1), der Straßenbahn (1) vorausfahrenden Kraftfahrzeuges (4),
wobei die Einrichtung eine mit den Sensormitteln verbundene Auswerteeinheit (9) umfasst, die zur Erstellung einer Prognose über eine zukünftige Kollisionsgefahr zwischen Straßenbahn (1) und Kraftfahrzeug (4) unter Berücksichtigung des Fahrzeugabstandes und der Fahrgeschwindigkeiten vorgesehen ist,
wobei die Einrichtung Ausgabemittel umfasst, und die Auswerteeinheit (9) dazu vorgesehen ist, über die Ausgabemittel eine Ausgabe eines zumindest an das vorausfahrene Kraftfahrzeug (4) gerichteten präventiven Kollisionswarnsignals zu veranlassen,
wobei die die Einrichtung eine Übertragungseinheit (14) zur drahtlosen Übermittlung des Kollisionswarnsignal an andere Verkehrsteilnehmer umfasst, an die die Auswerteeinheit (9) angeschlossen ist, wobei die Einrichtung kompatible Empfangseinrichtungen zum Empfang des drahtlos übermittelten Kollisionswarnsignals umfasst, und die Kraftfahrzeuge (4) der anderen Verkehrsteilnehmer mit den Empfangseinrichtungen ausgestattet sind.

6. Einrichtung nach Anspruch 5,
**dadurch gekennzeichnet, dass**
die Sensormittel als eine optische Bilderfassungssensorik (7) und/oder als eine Radarsensorik (8) ausgebildet sind.

7. Einrichtung nach Anspruch 5,
**dadurch gekennzeichnet, dass**
die Ausgabemittel als ein Scheinwerfer (10) zur Ausgabe eines optischen Lichtstrahlsignals (11) und/oder als ein Lautsprecher (13) zur Ausgabe eines akustischen Warnsignals ausgebildet sind.

8. Einrichtung nach Anspruch 5,
**dadurch gekennzeichnet, dass**
die Auswerteeinheit (9) an eine Fahrzeug-/Bremssteuerung des Schienenfahrzeuges (1) anschließbar ist.

9. Computerprogrammprodukt mit Programmcodemitteln zur Durchführung des Verfahrens nach einem der vorstehenen Ansprüche 1 bis 4, wenn das Computerprogrammprodukt auf einer Auswerteeinheit (9) einer Einrichtung nach einem der Ansprüche 5 bis 8 abläuft, das insbesondere auf einem computerlesbaren Datenspeicher gespeichert ist.

## Claims

1. Method for outputting a collision warning signal to the surroundings of a streetcar (1) running on a center lane of a multi-lane road in order to avoid a collision with a motor vehicle (4) which is probably turning left and crossing the lane (2) of the streetcar (1),
wherein the following steps are carried out to avoid collisions between the streetcar (1) and the motor vehicle (4):
- determining a probable intention to turn left (A) of a motor vehicle (4) traveling on a lane (5) to the right of the lane (2) of the streetcar (1), ahead of the streetcar (1), by a sensor system of the streetcar (1) which is directed forward and detects the motor vehicle (4) and if there is a probable intention of the motor vehicle (4) to turn left.
- creating a prediction (B) about a future risk of collision between the streetcar (1) and a motor vehicle (4), taking into account the distance between the vehicles and the driving speeds, and if a risk of collision is likely,
- outputting a preventive collision warning signal (C) directed at least to the motor vehicle (4) in front by the streetcar (1), wherein the collision warning signal (C) is transmitted via wireless transmission at least to the driver of the motor vehicle (4) and other road users the motor vehicles (4) of which are equipped with a compatible receiving device for receiving the wirelessly transmitted collision warning signal.

2. Method according to claim 1,
**characterized in that**
the preventive collision warning signal is out as a result of the prediction before the distance between the streetcar (1) and the motor vehicle (4) falls below a predicted braking distance of the streetcar (1).

3. Method according to claim 1 or claim 2,
**characterized in that**
in the event that the predicted braking distance of the streetcar (1) is greater than the distance between the streetcar (1) and the motor vehicle (4) when there is a risk of collision, a braking of the streetcar (1) is performed in order to maintain the braking distance of the streetcar (1).

4. Method according to claim 1,
**characterized in that**
in order to determine a probable intention to turn left, a lane change of the motor vehicle (4) in front into a left-turn lane (5) and/or an activation of a left turn signal (6) on the motor vehicle (4) is monitored by the sensor system of the streetcar (1).

5. Device for outputting a collision warning signal to the surroundings of a streetcar (1) running on a center lane of a multi-lane road in order to avoid a collision with a motor vehicle (4) which is probably turning left and crossing the lane (2) of the streetcar (1),
wherein, for collision avoidance between the motor vehicle (4) and the streetcar (1), the latter is equipped with sensor means directed forward for determining a probable left-turn intention of a motor vehicle (4) traveling in a lane (5) to the right of the lane (2) of the streetcar (1), ahead of the streetcar (1),
wherein the device comprises an evaluation unit (9) connected to the sensor means, which is provided for producing a prediction of a future risk of collision between the streetcar (1) and the motor vehicle (4), taking into account the distance between the vehicles and the driving speeds,
wherein the device comprises output means, and the evaluation unit (9) is provided for causing through the output means an output of
a preventive collision warning signal directed at least to the vehicle (4) driving ahead,
wherein the device comprises a transmission unit (14) for wireless transmission of the collision warning signal to other road users, to which the evaluation unit (9) is connected.
wherein the device comprises compatible receiving means for receiving the wirelessly transmitted collision warning signal, and the motor vehicles (4) of the other road users are equipped with the receiving means.

6. Device according to claim 5,
**characterized in that**
the sensor means are designed as an optical image capture sensor system (7) and/or as a radar sensor system (8).

7. Device according to claim 5,
**characterized in that**
the output means are designed as a spotlight (10) for outputting an optical light beam signal (11) and/or as a loudspeaker (13) for outputting an acoustic warning signal.

8. Device according to claim 5,
**characterized in that**
the evaluation unit (9) can be connected to a vehicle/brake control system of the rail vehicle (1). .

9. Computer program product with program code means for carrying out the method according to any one of the preceding claims 1 to 4, when the computer program product runs on an evaluation unit (9) of a device according to any one of claims 5 to 8, which is stored in particular on a computer-readable data memory.

## Revendications

1. Procédé d'émission d'un signal d'avertissement de collision dans l'environnement d'un tramway (1) roulant sur une voie centrale pour éviter les collisions en présence d'un véhicule automobile (4) tournant à gauche et croisant probablement la voie de circulation (2) du tramway (1),
dans lequel les étapes suivantes sont réalisées pour éviter les collisions entre le tramway (1) et le véhicule automobile (4) :
- la détermination d'une intention probable de tourner à gauche (A) d'un véhicule automobile (4) circulant sur une voie (5) située à droite de la voie (2) du tramway (1) et précédant le tramway (1) par un système de détection pré-orienté du tramway (1) détectant le véhicule automobile (4), et en présence d'une intention probable de tourner à gauche du véhicule automobile (4),
- l'établissement d'un pronostic (B) d'un risque de collision imminente entre le tramway (1) et le véhicule automobile (4) en prenant en compte la distance entre véhicules et les vitesses des véhicules et si un risque de collision est probable,
- l'émission par le tramway (1) d'un signal préventif d'avertissement de collision (C) adressé au moins sur le véhicule automobile (4) le précédant, dans lequel le signal d'avertissement de collision (C) est transmis par une transmission sans fil au moins au conducteur du véhicule automobile (4) et à d'autres usagers du transport, dont les véhicules automobiles (4) sont équipés d'un dispositif de réception compatible pour la réception du signal d'avertissement de collision transmis sans fil.

2. Procédé selon la revendication 1,
**caractérisé en ce que**
le signal préventif d'avertissement de collision est émis à la suite du pronostic avant que la distance entre le tramway (1) et le véhicule automobile (4) n'atteigne pas une course de freinage pronostiquée du tramway (1).

3. Procédé selon la revendication 1 ou 2,
**caractérisé en ce que**
au cas où en présence de risque de collision, la course de freinage pronostiquée du tramway (1) est supérieure à la distance entre le tramway (1) et le véhicule automobile (4), un freinage du tramway (1) est réalisé afin de préserver la course de freinage du tramway (1).

4. Procédé selon la revendication 1,
**caractérisé en ce que**
pour déterminer une intention probable de tourner à gauche, un changement de voie du véhicule automobile (4) circulant devant vers une voie de présélection pour tourner à gauche (5) et/ou l'activation d'un clignotant gauche (6) du véhicule automobile (4) est surveillé par le système de capteurs du tramway (1).

5. Appareil d'émission d'un signal d'avertissement de collision dans l'environnement d'un tramway (1) roulant sur une voie centrale d'une route à plusieurs voies pour éviter les collisions en présence d'un véhicule automobile (4) tournant à gauche et croisant probablement la voie de circulation (2) du tramway (1),
dans lequel pour éviter les collisions entre le véhicule automobile (4) et le tramway (1), ce dernier est équipé de moyens de détection préorientés, pour la détermination d'une intention probable de tourner à gauche d'un véhicule automobile (4) précédant le tramway (1) sur une voie de circulation (5) à droite de la voie de circulation (2) du tramway (1),
dans lequel l'appareil comprend une unité d'évaluation (9) reliée aux moyens de détection, qui est prévue pour l'établissement d'un pronostic d'un risque de collision imminent entre le tramway (1) et le véhicule automobile (4) en prenant en compte la distance entre véhicules et les vitesses des véhicules,
dans lequel l'appareil comprend des moyens d'émission et l'unité d'évaluation (9) est prévue afin de provoquer par les moyens d'émission une émission d'un
signal préventif d'avertissement de collision adressé au moins au véhicule automobile (4) le précédant,
dans lequel l'appareil comprend une unité de transmission (14) pour la transmission sans fil du signal d'avertissement de collision à d'autres usagers de la circulation, à laquelle l'unité d'évaluation (9) est raccordée,
dans lequel l'appareil comprend des dispositifs de réception compatibles pour la réception du signal d'avertissement de collisions transmis sans fil et les véhicules automobiles (4) des autres usagers de la circulation sont équipés des dispositifs de réception.

6. Appareil selon la revendication 5,
**caractérisé en ce que**
les moyens de détection sont formés comme un système de détection d'image (7) optique et/ou comme un système de détection radar (8).

7. Appareil selon la revendication 5,
**caractérisé en ce que**
les moyens d'émission sont formés comme un phare (10) pour l'émission d'un signal de faisceau lumineux (11) et/ou comme un haut-parleur (13) pour l'émission d'un signal d'avertissement acoustique.

8. Appareil selon la revendication 5,
**caractérisé en ce que**
l'unité d'évaluation (9) peut être raccordée à une commande de véhicule/de freinage du véhicule ferroviaire (1).

9. Produit de programme informatique avec des moyens de code de programme pour la réalisation du procédé selon l'une quelconque des revendications précédentes 1 à 4, lorsque le produit de programme informatique s'exécute sur une unité d'évaluation (9) d'un appareil selon l'une quelconque des revendications 5 à 8 qui est enregistré en particulier sur une mémoire de données lisible par ordinateur.
